# EUROPEAN PATENT APPLICATION

(11) **EP 2 360 585 A1**
(43) Date of publication of application: **24.08.2011**
(21) Application number: 11155486.1
(22) Date of filing: 22.02.2011
(51) Int. Cl.: G06F 9/455, G06F 17/50

(54) **Systems and methods for emulating hardware devices**

(30) Priority: 24.02.2010 US 711830
(71) Applicant: Sling Media, Inc., Foster City, CA 94404 (US)
(72) Inventor: Gurzhi, Alexander, Cupertino, CA 95014-3667 (US); Balter, Arkady, San Francisco, CA 94132 (US)
(74) Representative: Needle, Jacqueline

(57) **Abstract**

A virtual placeshifting device, set top box (STB), media player or other hardware device is implemented using a computing system [102] executing a software emulator [120]. A message [210] received at the computer requests a session [213] with a client application. The session is established between an emulator application executing on the computer and the client application, wherein the emulator application [120] is arranged to emulate an application programming interface associated with an actual hardware device. Communications are exchanged between the emulator application executing on the computer and the client application throughout the session, so that each of the communications is consistent with the application programming interface (API) associated with the actual hardware device.

## Description

The present invention relates to systems and methods for emulating hardware devices.

For example, tools used in the development and/or testing of hardware components, such as placeshifting devices, time shifting devices, and set-top boxes, may be provided.

Today's consumers use many different types of media components and other hardware devices on a regular basis. A typical home, for example, may receive media programming via a set top box (STB) or other receiver that receives and decodes direct broadcast satellite (DBS), cable, terrestrial broadcast and/or other programming. Consumers frequently obtain additional media content using any number of different media players, such as digital versatile disk (DVD) players or streaming media players that receive content over the Internet or another network. Received programming may be recorded on a digital video recorder (DVR) or the like to shift playback to a later time. Live and/or time shifted playback is typically provided using a conventional television or other display. In recent years, consumers are increasingly "place shifting" media content across communications networks for playback at portable computers, mobile phones, or other remote locations. Often, different media functions are combined into a single chassis: a set top box, for example, might provide time and/or place shifting features in addition to receiving and decoding television programming. Consumers may make use of different media components, including STBs or other receivers, DVRs, placeshifting devices, television displays and/or any number of other components to enjoy television and/or other media content. Consumers often use other types of hardware devices in addition to the media components referred to above.

In recent years, many media and other hardware devices are increasingly becoming "network enabled" for communications using the Internet or another network. Network connectivity is now used to transmit or receive content, to receive instructions from a user or from another component, to obtain software updates, and/or for any number of other purposes. A placeshifting device, for example, may transmit a stream of received programming across local area, wide area, telephone and/or other network to a remote media player. Many other types of components similarly act as clients or servers on one or more networks.

There are challenges in designing network-enabled hardware devices. Because such devices are often implemented with proprietary or other customized hardware designs, prototypes or other samples of new components can be expensive and difficult to obtain until the new design is finalized and manufactured. This limited hardware availability can lead to difficulties in designing and/or testing new applications that are compatible with the new hardware. This difficulty, in turn, can cause delays, as well as challenges in optimizing communications between client/server applications.

The present invention seeks to propose systems and methods allowing for more convenient development and/or testing of devices.

In accordance with a first aspect of the present invention there is provided a system configured to emulate an actual hardware device having an application programming interface, the system comprising:
an interface to a digital communications network;
a storage medium configured to store a general-purpose operating system and an emulator application compatible with the general-purpose operating system; and
a general-purpose processor coupled in communication with the interface and the storage medium, wherein the general-purpose processor is configured to execute the general-purpose operating system and the emulator application to receive a message requesting a session between a client application and the emulator application via the interface, to establish the session between the emulator application and the client application, and to exchange communications between the emulator application and the client application via the interface, wherein the communications emulate the application programming interface associated with the actual hardware device.

The invention also extends to a system for emulating a hardware device having an application programming interface, the system comprising:
an interface to a digital communications network;
storage means for storing a general-purpose operating system and an emulator application compatible with the general-purpose operating system,
   wherein the emulator application emulates a special purpose hardware device; and
a processor for communicating with the interface and the storage means;
wherein the processor is arranged to execute the general-purpose operating system and the emulator application to receive a message requesting a placeshifting session between a client application and the emulator application via the network, to establish the placeshifting session between the emulator application and the client application, and to exchange communications between the emulator application and the client application via the network, wherein the communications emulate the application programming interface associated with the special purpose hardware device..

Embodiments of the invention may implement a virtual placeshifting device, set top box (STB), media player, media recorder or other hardware device using a computing system.

In an embodiment, the special purpose hardware device is a set top box, and/or a placeshifting device.

The emulator application may provide a virtual representation of the special purpose hardware device.

Preferably, the processor is further arranged to update the software application to reflect changes in the application programming interface.

The system may be implemented with a personal computer, the general-purpose operating system may be a WINDOWS operating system, and the emulator application may comprise a WINDOWS service.

Alternatively, the system may be implemented with a personal computer, the general-purpose operating system may be a substantially POSIX-compliant operating system, and the emulator application may comprise a daemon.

The present invention also extends to a method executable by a computer, the method comprising:
receiving a message at the computer that requests a media placeshifting session with a client application;
establishing the media placeshifting session between an emulator application executing on the computer and the client application, wherein the emulator application is arranged to emulate an application programming interface associated with a placeshifting device; and
exchanging communications between the emulator application executing on the computer and the client application throughout the media placeshifting session, wherein each of the communications is consistent with the application programming interface associated with the actual placeshifting device.

Preferably, the method further comprises registering the emulator application with a registry of placeshifting devices prior to receiving the message from the client application.

In an embodiment, the computer is a personal computer configured to execute a general purpose operating system, and wherein the emulator application is compatible with the general purpose operating system.

Preferably, the client application is a media player application.

According to a further aspect of the present invention there is provided a method for communicating with a media player via a digital network, the method comprising:
receiving a request message from the media player at a computer, wherein the request message requests a placeshifting session;
establishing the placeshifting session between an emulator application executing on the computer and the media player; and
emulating an actual placeshifting device with the emulator application executing on the computer by exchanging communications between the emulator application and the media player via the digital network, wherein each of the communications provided by the emulator application is compatible with an application programming interface associated with the actual placeshifting device.

The emulator application may provide a virtual model of the actual placeshifting device.

Preferably, the emulating comprises providing a uniform resource locator of a media stream from the emulator application to the media player.

In an embodiment, at least some of the communications are configured to establish a streaming media connection to the media player in accordance with the application programming interface.

Embodiments of the invention are executable by a personal or other computer. A message received at the computer requests a session with a client application. The session is established between an emulator application executing on the computer and the client application, wherein the emulator application is arranged to emulate an application programming interface associated with an actual hardware device. Communications are exchanged between the emulator application executing on the computer and the client application throughout the session, wherein the communications are consistent with the application programming interface (API) associated with the actual hardware device.

Embodiments of the invention may provide a method executable by a virtual placeshifting device operating on a personal or other computing system to communicate with a media player via a digital network. The method may comprise receiving a request message from the media player at the computer, wherein the message requests a placeshifting session between the media player and a placeshifting device; establishing the placeshifting session between an emulator application executing on the general-purpose computer and the media player; and emulating the placeshifting device with the emulator application executing on the general-purpose computer by exchanging communications between the emulator application and the media player via the digital network, wherein each of the communications provided by the emulator application is compatible with an application programming interface associated with the placeshifting device.

The invention may also provide a system arranged to emulate an actual hardware component having an application programming interface. The system may comprise an interface to a digital communications network, a storage medium configured to store a general-purpose operating system and an emulator application compatible with the general-purpose operating system, and a general purpose processor. The general-purpose processor is coupled in communication with the interface and the storage device, wherein the processor is configured to execute the general-purpose operating system and the emulator application to receive a message requesting a session between a client application and the emulator application via the interface, to establish the session between the emulator application and the client application, and to exchange communications between the emulator application and the client application via the interface, wherein the communications emulate the application programming interface associated with the actual hardware component.

Embodiments of the present invention will hereinafter be described, by way of example, with reference to the following drawings, in which:
FIG. 1 shows an environment in which an emulator application can operate; and
FIG. 2 illustrates a method of emulating a media component or other device.

A "virtual" representation of a media component or other hardware device is provided using emulation software executing on a personal computer or other general purpose computing system. The emulator application emulates an application programming interface (API) used in the actual hardware device, thereby providing a working model for the API in a format that is executable on a conventional computing system. By providing convenient access to the API, other products that interact with the API can be developed and tested even when specialized hardware is not readily available. Unlike the actual devices that are typically implemented using proprietary or other specialized hardware, then, the virtual device that is implemented in emulator software may be quickly and easily distributed and updated to allow development or testing of client applications, server applications, or other products that interact with the actual hardware device.

The virtual device may have any number of uses. The emulator application can be transmitted to a developer to allow compatibility testing between client and/or server products that interact with the actual hardware device. A virtual placeshifting device, for example, could be provided to a media player developer to assist in the design and testing of media players that are compatible with the API of the actual placeshifting device. This virtual model could be provided even when an actual implementation of the hardware device has not been built, or is not otherwise readily available. The virtual device may therefore serve as a "working model" of the device API that can be of great benefit to developers and testers.

The virtual device may also be useful in developing and testing the device API itself. By initially emulating the API in a virtual software model, certain issues can be identified and addressed before expensive hardware and/or embedded software is produced. In many situations the virtual component can allow simulation and other testing of a proprietary or other relatively "closed" platform using a similar (if not identical) API running on an open platform such as a personal computer or the like.

The virtual device may be used to test network conditions associated with installed actual devices. A technician, for example, could use emulator software installed on a laptop or similar computer to provide a second device on a home or other network where an actual device is installed. The virtual component may be useful in identifying or isolating network issues, or in determining whether an installed device is problematic for any reason. Virtual devices may also be provided as relatively inexpensive "free samples" to potential customers, or for any other purpose. By providing a convenient yet accurate model of the device API, the virtual devices are able to achieve any number of benefits to developers, testers, installers, users and/or others.

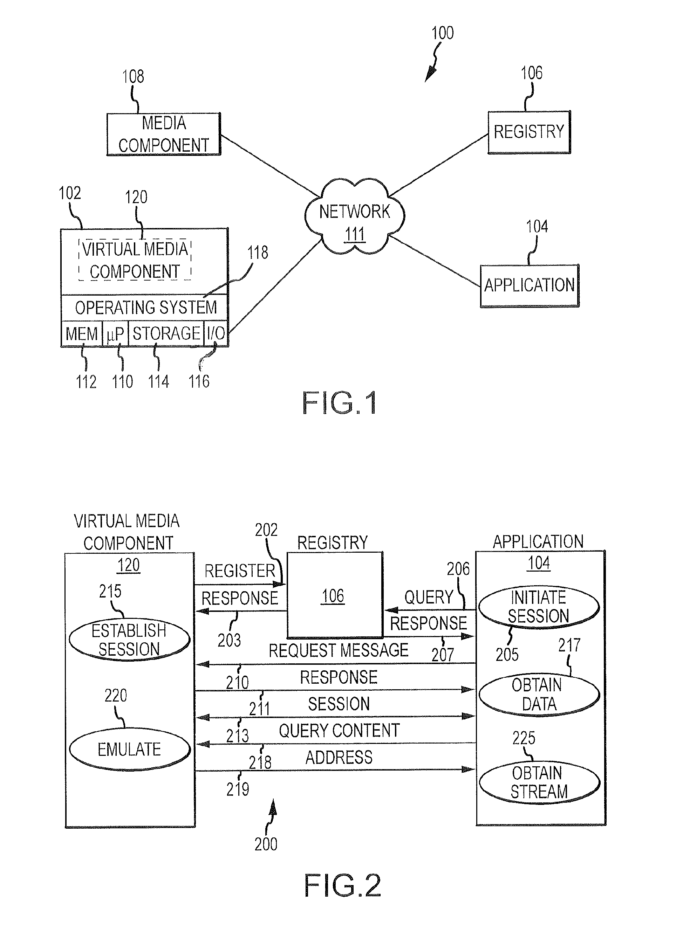

FIG. 1 shows an environment 100 for developing, testing and/or deploying network-enabled hardware devices includes a general purpose computer system 102 that executes a emulator application 120. (Emulator application 120 is also referred to as a "virtual device 120".) FIG. 1 also shows a hardware or software client application 104 (e.g., a media player or the like) communicating with an actual hardware device 108 (also referred to as "actual device 108"). As shown, client application 104 communicates with actual device 108 and/or virtual device 120 over a network 111. The client application 104 may obtain addresses on network 111 for actual device 108 and/or virtual device 120 using an address server or other registry 106.

It may be required to test the ability of the client application 104 to communicate with one or more actual devices 108. For example, the client application 104 may be in development. If an actual device 108 having the desired configuration is not readily available for such testing, a virtual device 120 can be provided to emulate the API of actual device 108, thereby allowing for development and testing of client application 104 even when a suitable actual device 108 is not available.

Actual device 108 is any component or other special-purpose device that is capable of communicating with application 104 via network 111. The actual device 108 may be implemented using at least some special-purpose hardware or other logic, such as any sort of embedded software, firmware and/or application-specific integrated circuitry. Although some actual devices 108 may include general-purpose parts or other features (e.g., digital signal processors or other general purpose circuitry), devices 108 will typically be implemented within a specific housing or chassis and will be intended to provide specific data-processing or other features. A conventional general-purpose personal computer, for example, would not by itself be considered an "actual device" 108, although some "actual devices" 108 may include conventional bus architectures, interfaces, processors or other internal circuitry, operating systems and/or other features that may have common application in personal computing. Examples of actual hardware devices 108 that may be used include media components such as placeshifting devices, set top boxes (STBs) or other television receivers, digital video recorders (DVRs) or other time shifting devices, media players and/or other network-enabled devices that are provided for the express purpose of processing video or other media content. Several detailed examples of placeshifting devices are described in U.S. Patent Publication No. 2006/0095471.

Virtual device 120 is a software implementation that emulates the API(s) of one or more actual media components 108. The virtual device 120 may be implemented using conventional software constructs that can be executed on a general-purpose computer system 102. As shown in FIG. 1, computer system 102 is a personal computer (PC) that may be obtained from any source. The computer system 102 has a processor 110, as well as memory 112, mass storage 114 and input/output (I/O) features 116. The mass storage 114 may include any storage media, such as a magnetic or optical disc drive, a solid state drive, and/or the like. I/O features 116 typically include wired and/or wireless interfaces, such as any sort of network interface card (NIC) that is compatible with IEEE 802.3, 802.11 and/or other communications protocols used on network 111.

The computer system 102 has a locally-stored operating system 118 that allows the software implementation of virtual device 120 to access hardware 110-116 and other features of computer system 102, as appropriate. Examples of operating systems 118 that may be used include WINDOWS, OSX, LINUX or other operating systems, such as any operating system that is substantially compliant with POSIX standards. "Substantially compliant" in this context recognizes that some operating systems may not be perfectly compliant with then-prevailing POSIX standards, but may nevertheless be sufficiently compliant to implement the features described herein. Substantially-compliant POSIX operating systems which may be used (e.g., any versions of UNIX, LINUX, OSX and/or the like) may support such features as multi-threading, socket-level programming, daemon processes and/or the like.

Emulator application 120 is implemented using software applications, applets, objects, routines, libraries, scripts and/or the like, including complied or interpreted software code. The emulator application 120 may be implemented, at least in part, with a conventional WINDOWS service that is compatible with the WINDOWS operating system 118. Versions based upon POSIX or similar operating systems 118 may use daemons or other processes, as required. Generally speaking, emulator application 120 contains logic to receive requests for connections, to establish connections to client applications 104 or the like, and to emulate the API(s) of actual hardware device(s) 108. Where the emulator application 120 communicates with client applications 104 over network 111, for example, a socket connection to a particular port may be used to transmit and receive messages via the network interface or other I/O features 116.

Network 111 is any digital or other communications network capable of transmitting messages between senders and receivers. The network 111 may represent a wide area network, a local area network, and/or any combination of wide and local area networks. Public or private data connections, and/or links or networks supporting any number of communications protocols may be included. Network 111 may also include the Internet, for example, or any other network based upon TCP/IP or other protocols. The environment 100 may be wholly or largely implemented within a relatively small geographical area (e.g., within a home, office or other structure). For example, the network 111 may represent a conventional local area network, such as one or more IEEE 802.3 and/or IEEE 802.11 networks. Network 111 as shown in FIG. 1 may be any digital communications network, system or architecture for transmitting data between the various components of environment 100.

FIG. 1 shows a client application 104 that communicates with actual and virtual devices 108 and 120 using network 111. However, there may be no use of network communications at all. Different client applications 104, for example, may simply reside on the general purpose computer system 102, with communications between the application 104 and virtual device 120 occurring mostly, if not entirely, within the computer system 102. Such communications may be facilitated by the operating system 118. Moreover, although FIG. 1 shows a "client" application 104, with the use of similar constructs and techniques, communication may occur with different types of applications. That is, emulation of the API could be used for any purpose, including any communications where the emulated device acts as a client, a server, a peer, or in any other manner.

Emulation of the API associated with actual device 108 may be implemented in any manner. The actual software, firmware or other code used in an actual hardware device 108 may be executed on computing system 102 to emulate the API using any translation, adaptation or other abstraction features. However, separate code may be developed for the relatively open environment of the general purpose computer 102. Such code may be easier and/or faster to develop than more specialized code that may be used in certain types of actual devices 108. In addition, the API of actual device 108 may be emulated in any other manner.

FIG. 2 shows a method 200 in which a client or other application 104 establishes a session 213 with virtual device 120. As noted above, communications between the application 104 and the virtual device 120 may be carried out over network 111, internally within computing system 102, or in any other manner.

As shown in FIG. 2, the virtual device 120 initially makes itself known on network 111 by transmitting a registration message 202 to registry 106. Registry 106 responds to message 202 by adding virtual device 120 to the database of available services, and by transmitting a confirmation response 203. This registry 106 may be a database or other server that assists applications operating on network 111 in finding media components 108 and/or 120. Registry 106 may also perform authentication, registration, address translation and/or any other actions as required.

Application 104 initiates sessions with one or more virtual media components 120 in any manner (function 205). The client application 104 may initially query the registry 106 (message 206) and receives a response 207 that contains the network address of an actual device 108 or a virtual device 120. Inter-process communications features of the operating system 118 or other faculties may be used to communicate between the application 104 and the virtual device 120.

The various messages and other communications 210, 211, 213, 218, 219 exchanged between application 104 and virtual device 120 may be formatted as required. Each of the communications exchanged between application 104 and virtual device 120 may be formatted in accordance with the application programming interface used by the actual device 108. While the formatting and schema of the particular API will vary, various implementations may use hypertext transport protocol (HTTP) and/or extensible markup language (XML) or the like to format data contained within each message. SOAP, XHTML and/or the like may also be used to format data contained within each communication. The virtual device 120 therefore emulates the actual device 108 by using the same API as the actual device 108 (function 220). This API may include, for example, application programming interface (API) any software interfaces that enable interaction with other software. The API may be emulated using any applications, libraries and/or operating system features to determine the vocabulary, calling conventions, formats and/or other features that client applications 104 would employ to access or use services of an actual device 108. The emulated API may include any specifications for processing routines, data structures, object classes, communications protocols or other features used to communicate between application 104 and actual device 108.

In the exchange shown in FIG. 2, the application 104 sends a request message 210 that is formatted in accordance with the API of the actual device 108 to the address received in response 207. This message 210 is received by the virtual device 120 using, for example, the NIC or other I/O features 116, as well as operating system 118. The virtual device 120 is able to parse the message 210 to establish a communications session 213 between the virtual device 120 and the application 104 (function 215). The virtual device 120 may transmit a response 211 to the application 104 that allows session 213 to be established between the application 104 and the virtual device 120.

Communication exchanges by way of session 213 may vary significantly. FIG. 2, for example, shows application 104 obtaining additional data (function 217) that can be used to obtain a place shifted media stream or file, or any other information. In this example, application 104 places a query or request for content 218 via session 213. Virtual device 120 suitably responds to the query by providing a uniform resource locator (URL) or other address that identifies a media stream, file or other content that can be obtained (function 225) by application 104. Different functions may be provided using different types of virtual devices 120 and/or features emulated within function 220. Other examples in addition to the placeshifting examples described may be provided.

As noted at the outset, the virtual media device 120 may be provided for many different types of media devices, and for many different purposes. The "working model" of the API may be of substantial benefit in designing or testing the emulated API design, or in identifying issues for subsequent development. Because the virtual device 120 is implemented with emulator software, it may be readily distributed and shared in any manner. This may allow supplier, vendors or contractors to conveniently access new APIs before custom hardware is available.

It will be appreciated that variations in, and modifications to, the embodiments as described and illustrated may be made within the scope of the accompanying claims.

## Claims

1. A system for emulating a hardware device having an application programming interface, the system comprising:
an interface [116] to a digital communications network [111];
storage means [114] for storing a general-purpose operating system [118] and an emulator application [120] compatible with the general-purpose operating system, wherein the emulator application emulates a special purpose hardware device; and
a processor [110] for communicating with the interface [116] and the storage means [114];
wherein the processor [110] is arranged to execute the general-purpose operating system and the emulator application to receive a message [210] requesting a placeshifting session [213] between a client application and the emulator application via the network, to establish [215] the placeshifting session between the emulator application and the client application, and to exchange communications between the emulator application and the client application via the network, wherein the communications emulate the application programming interface associated with the special purpose hardware device.

2. A system as claimed in Claim 1, wherein the special purpose hardware device is a set top box.

3. A system as claimed in Claim 1 or Claim 2, wherein the special purpose hardware device is a placeshifting device.

4. A system as claimed in any preceding claim, wherein the emulator application provides a virtual representation of the special purpose hardware device.

5. A system as claimed in any preceding claim, wherein the processor [110] is further arranged to update the software application to reflect changes in the application programming interface.

6. A system as claimed in any preceding claim, wherein the system is implemented with a personal computer, the general-purpose operating system is a WINDOWS operating system, and the emulator application comprises a WINDOWS service.

7. A system as claimed in any of Claims 1 to 5, wherein the system is implemented with a personal computer, the general-purpose operating system is a substantially POSIX-compliant operating system, and the emulator application comprises a daemon.

8. A method executable by a computer, the method comprising:
receiving a message at the computer that requests a media placeshifting session with a client application;
establishing the media placeshifting session between an emulator application executing on the computer and the client application, wherein the emulator application is arranged to emulate an application programming interface associated with a placeshifting device; and
exchanging communications between the emulator application executing on the computer and the client application throughout the media placeshifting session, wherein each of the communications is consistent with the application programming interface associated with the actual placeshifting device.

9. A method as claimed in Claim 8, further comprising registering the emulator application with a registry of placeshifting devices prior to receiving the message from the client application.

10. A method as claimed in Claim 8 or Claim 9, wherein the computer is a personal computer arranged to execute a general purpose operating system, and wherein the emulator application is compatible with the general purpose operating system.

11. A method as claimed in any of Claims 8 to 10, wherein the client application is a media player application.

12. A method for communicating with a media player via a digital network, the method comprising:
receiving a request message from the media player at a computer,
wherein the request message requests a placeshifting session;
establishing the placeshifting session between an emulator application executing on the computer and the media player; and
emulating an actual placeshifting device with the emulator application executing on the computer by exchanging communications between the emulator application and the media player via the digital network, wherein each of the communications provided by the emulator application is compatible with an application programming interface associated with the actual placeshifting device.

13. A method as claimed in Claim 12, wherein the emulator application provides a virtual model of the actual placeshifting device.

14. A method as claimed in Claim 12 or Claim 13, wherein the emulating comprises providing a uniform resource locator of a media stream from the emulator application to the media player.

15. A method as claimed in any of Claims 11 to 14, wherein at least some of the communications are configured to establish a streaming media connection to the media player in accordance with the application programming interface.
